# NEW EUROPEAN PATENT SPECIFICATION

(11) **EP 0 801 230 B2**
(45) Date of publication and mention of the opposition decision: **13.05.2009**
(45) Mention of the grant of the patent: 23.04.2003
(21) Application number: 97301765.0
(22) Date of filing: 17.03.1997
(51) Int. Cl.: F04D 29/32, F01D 5/14

(54) **Swept fan blade**
Gekrümmte Gebläseschaufel
Aube de soufflante recourbée

(30) Priority: 09.04.1996 GB 9607316
(43) Date of publication of application: 15.10.1997
(73) Proprietor: ROLLS-ROYCE PLC, London, SW1E 6AT (GB)
(72) Inventor: Rowlands, Paul Anthony, Clifton, Bristol BS8 2UB (GB)
(74) Representative: Naylor, Matthew John

(56) References cited:
- EP-A- 0 266 298
- EP-A- 0 774 567
- US-A- 3 989 406
- US-A- 3 989 406
- US-A- 4 012 172
- US-A- 4 358 246
- L.H. SMITH AND H. YEH JOURNAL OF BASIC ENGINEERING September 1963, pages 401 - 416 & US 5 167 489 A 01 December 1992 & Declaration by Dr. Yuan Dong front page and page 6
- Second Declaration of Professor Frans Breugelmans made on behalf of United Technologies Corp.
- Third Declaration of Professor Frans Breugelmans made on behalf of United Technologies Corp.

## Description

The invention relates to a swept fan blade or compressor blade for a ducted fan gas turbine engine.

In particular the invention concerns the design of fan blades for a high bypass ratio engine of the kind used to power modern civil aircraft. A primary function of the fan is to generate propulsive thrust by adding energy to air passing through a fan duct thereby increasing the pressure and momentum of the air. The performance of such a rotor is judged by the maximum thrust it produces, by way of maximum air flow and pressure rise, and the proportion of the energy input to the fan which is turned into useful thrust, characterised by the fan adiabatic efficiency. Fan stability is an important design consideration and a margin is allowed to ensure stable operation. Therefore, it is standard practice to design a fan to achieve a given airflow and pressure rise at a chosen rotational speed which is below the maximum attainable, thus providing a stability margin.

The present invention has for one of its objectives to increase fan efficiency above the levels currently achieved with existing designs and to do so while maintaining fan rotational speed and maintaining or improving the pressure rise with no erosion of the stability margin.

Rotor efficiency has a strong influence on engine fuel consumption, so an increase in rotor efficiency has a direct, and substantial, effect on fuel consumption.

A fan rotor comprises a number of rotor blades mounted around a hub. Notionally, the shape of each blade may be defined as a plurality of stacked aerofoil segments each having a leading edge, a trailing edge, a pressure surface and a suction surface. These aerofoil segments are stacked one on top of another and may be axially and circumferentially disposed so that the leading edge is swept in a desired manner. Forward sweep has the segment leading edges progressively disposed in an upstream direction at greater rotor radii, similarly rearward sweep is the opposite progressive axial disposition in a downstream direction at successively greater radii. The stagger angle of an aerofoil segment is the angle of twist of a segment, measured as the angle between the segment chord and a plane through the axis of rotation. The chord of a blade segment is a straight line between the leading edge and the trailing edge of the segment.

EP 0266298A discloses a swept fan blade comprising a leading edge, which has a formed sweep angle between the root and a first intermediate radius and the leading edge has a rearward sweep angle between the first intermediate radius and the tip.

EP 0774567A, which has a priority date of 17 November 1995 and a publication date of 21 May 1997, discloses a swept fan blade comprising a leading edge, which has a forward sweep angle between the root and a first intermediate radius, the leading edge has a rearward sweep angle between the first intermediate radius and a second intermediate radius and the leading edge has a rearward sweep angle between the second intermediate radius and the tip. The rearward sweep angle between the second intermediate radius and the tip decreases or does not increase.

According to the present invention a swept fan blade for a ducted fan gas turbine engine comprises a root, a tip, a leading edge, a trailing edge a pressure surface and a suction surface, the leading edge being inclined with respect to the axial direction of airflow by a sweep angle which varies with span height, the leading edge has a forward sweep angle between the root and a first intermediate radius, the leading edge has a rearward sweep angle between the first intermediate radius and a second intermediate radius, the leading edge has a forward sweep angle between the second intermediate radius and the tip.

Usually sweep is employed to reduce the velocity of the airflow measured perpendicular to the leading edge to subsonic levels.

The invention and how it may be carried into practice will now be described in greater detail with reference to a particular embodiment illustrated in the accompanying drawings, in which:
Figure 1 shows a perspective view of a swept blade fan rotor,
Figure 2a, 2b and 2c show three orthogonal views of an individual blade from the rotor of Figure 1, on the surface of which a square grid pattern has been generated to illustrate the contours of the blade,
Figures 3a, 3b and 4a, 4b are side and tip views of unswept and swept blades respectively illustrating the effect of sweep on the blade shock waves,
Figure 5 is a view from a blade tip end of stacked aerofoil segments showing chord lengths and stagger angle changing with stacking height,
Figures 6a and 6b show contour map of static pressure on a blade suction surface and a corresponding contour map for relative Mach Nos, and
Figure 7 is a table of sweep angle, Mach angle and Mach No at a number of points along the span of a blade.

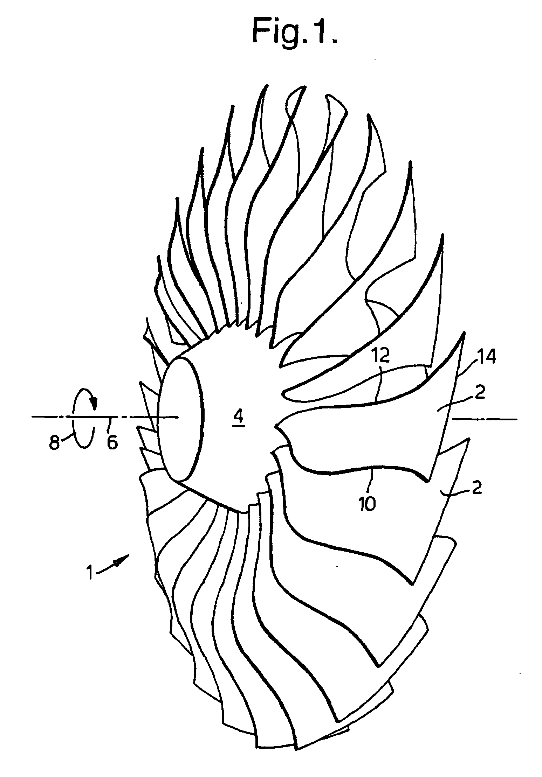

Referring, firstly, to the perspective view of a fan rotor in Figure 1 there is shown a circular array of identical swept fan blades, of which one is referenced at 2, equidistantly spaced apart around the periphery of a rotatable hub 4. The manner by which the blades 2 are mounted on the hub 4 has no significance to the present invention and no general limitation is intended by, nor should be inferred from, this description of an exemplary embodiment. Similarly, the composition and construction of the blades 2 is immaterial to this invention, that is whether the blades be solid or hollow, metal or composite, or monolithic or fabricated.

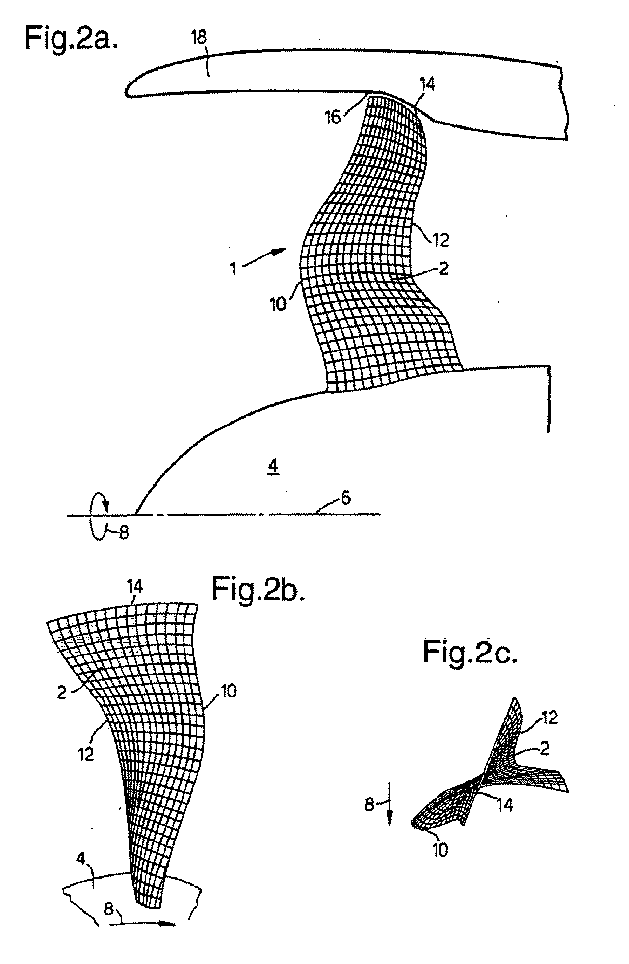

The hub 4 is rotatable about an axis 6 in the direction of arrow 8, and this direction of rotation defines for each blade 2, its leading edge 10 and trailing edge 12. The blades are shroudless and each therefore has a plain tip 14. In each of the drawings like parts carry like references. Therefore, it can be seen from Figure 2 that, as installed in an engine, the blade tip 14 runs close to a fan duct wall 16 which encircles the fan rotor stage 1 and forms the interior face of an engine nacelle, a portion of which is illustrated at 18. In Figure 2 only one blade is shown, the others having been omitted for clarity. Also in Figure 1 the apex of hub 4 has been cut-away in order to render visible those blades on the far side which would have been obscured otherwise.

In the three mutually orthogonal views of Figure 2 the blade is rendered with a square grid pattern on the suction and pressure faces. Thus, when viewed from the side, front and above as in Figures 2a, 2b and 2c respectively the square pattern is distorted in the perspective views by the shaped surfaces of the blade, thereby revealing the shapes of these surfaces.

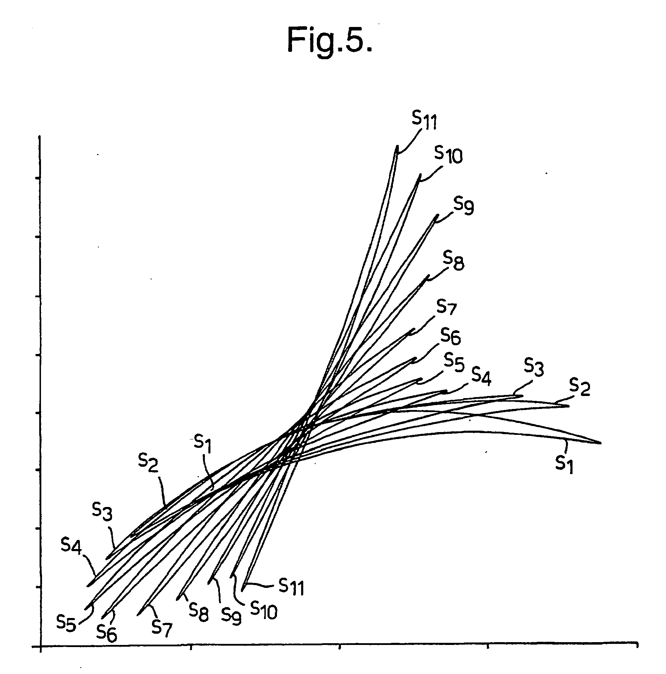

The shape of each blade 2 of the fan rotor 1 is defined notionally by a plurality of stacked aerofoil segments each having a leading edge, a trailing edge, a pressure surface and a suction surface. Although, for ease of description, a finite number of segments are discussed, Figure 5 shows eleven such segment profiles, it is to be understood that in practice in the manner of the incremental steps of mathematical calculus there would be a continuum of infinitely thin incremental steps.

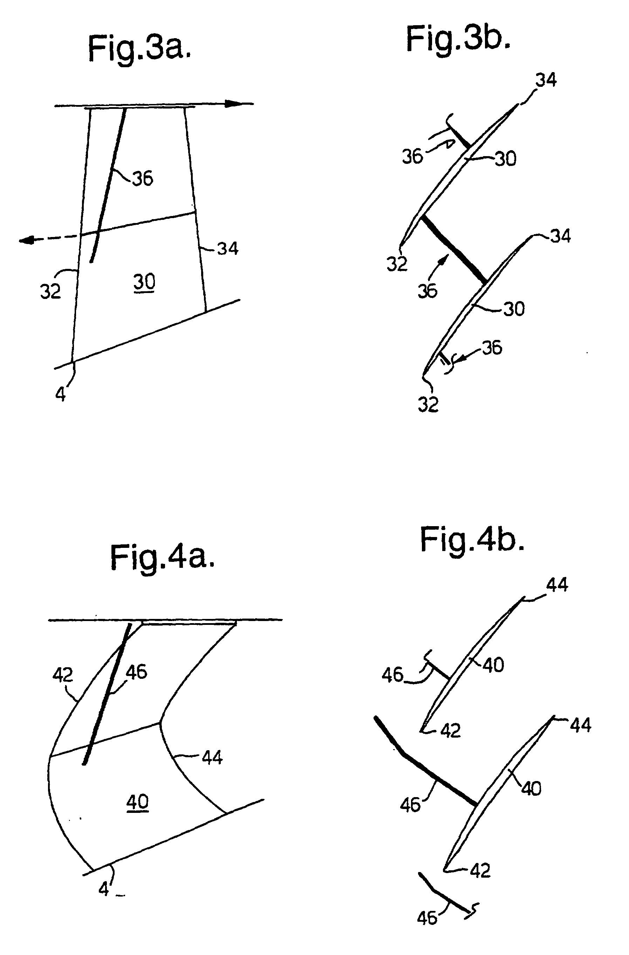

Figures 3a and 3b show side and tip views of a conventional, straight edged rotor blade 30 showing that the aerofoil sections over most of the blade height operate in a transonic flow regime. That is the velocity of the air flow relative to the rotor is supersonic when it passes over the leading edge 32 of the blade but is decelerated to subsonic speed before passing the trailing edge 34. Much of this deceleration takes place in a step pressure discontinuity 36 which extends as a two-dimensional surface across a flow channel between adjacent blades, and therefore is bounded on one side by the suction surface of one blade and the pressure surface of an adjacent rotor blade. This discontinuity 36, known as a passage shock wave, arises because the upstream supersonic flow cannot, by definition, react more gradually to downstream subsonic conditions.

The passage shock wave adds energy to the air, some of which cannot be recovered as thrust, and this energy loss in the shock wave contributes significantly to the total inefficiency of the fan rotor. Shock wave theory states that these losses are reduced when the Mach number of the airflow immediately ahead of the shock wave, and measured perpendicular to the wave front, is reduced. Therefore rotor efficiency may be increased by leaning the shock wave so that the air flow meets the discontinuity at a more oblique angle. The shock wave lean is achieved by applying sweep to the rotor as illustrated in the side and tip view of Figures 4a and 4b.

Surge margin is another design criterion to be considered. At the normal operating pressure rise and air flow rate the rotor must have sufficient safety margin to avoid flutter or surge. This margin is eroded when the operating pressure rise is increased. In such circumstances the shock wave is caused to move forwards towards the leading edge of the rotor blades. Eventually a limiting point is reached when the rotor can no longer maintain stable operation and the rotor will either suffer a violent reversal of airflow, known as a surge, or heavy vibration caused by local oscillations in airflow, known as flutter.

A simple form of swept rotor blade 40 is illustrated by Figures 4a and 4b. In effect the stacked aerofoil segments of a conventional blade ie of Figures 3a and 3b are shifted axially and circumferentially to provide a swept leading edge 4. It is necessary to employ forward sweep near the hub 4 to counteract the rearward sweep of the outboard sections of blade 30 in order to make the design mechanically feasible. Also shown in Figures 4a and 4b is the position of the shock surface 46 near to the suction surface. At a given aerofoil segment at a specific distance from the engine centre line (radial height) the position of the shock wave 46 is a function not only of the shape and position of this segment, but also of the position of the shock wave on other segments ie at different radial heights. This means that when a swept blade is designed as described above, the two-dimensional shock surface 46 tends to shift less than the shift of the aerofoil segments, ie the shock surface does not sweep as much as the leading edge 42. This results in the shock wave being closer to or even in front of the leading edge 42 near the suction surface at the tip of the blade, as shown on Figure 4a.

Such a design has inherently poor stability, that is a low pressure rise capability in comparison with the original conventional design. A swept blade of this type is therefore not viable.

The present invention, however, overcomes these inherent stability problems of sweep by employing a number of specific novel physical features to move shock surface rearwards, away from the leading edge, at the blade tip.

The physical shape of a fan blade designed according to the present invention is illustrated in Figure 1, Figures 2a, 2b, 2c and Figure 5. As previously mentioned the three views of Figures 2a, 2b and 2c include a rectangular grid on the surfaces of the blade in order to highlight its surface contours. Figure 5 shows in a superimposed or stacked view eleven blade segment profiles references S₁ - S₁₁ taken at equidistantly spaced radial heights from blade root to tip to illustrate the sweep, lean, twist etc of the blade at the eleven successively greater radial heights.

The rotor blade leading edge 10 (Figure 2a) is swept forward from the hub 4 or root segment S₁ (Figure 5) to a maximum forward segment S₅ at approximately mid-height from where the leading edge is swept rearwards through segments S₆ to S₁₀. Near the blade tip 16 (Figure 2a) the leading edge straightens and is then swept forward to the tip S₁₁. Between segments S₁₀ and S₁₁ the chord length of the aerofoil section is increased. The blade tip segment S₁₁ is positioned forward of the blade hub segment S₁, such that the point halfway between the leading edge and the trailing edge of the tip segment is axially upstream of a corresponding point of the hub segment.

The stagger angle, or twist, of the blade segments and how it changes with radial height between segments also will be apparent from Figure 5. In comparison with a known, conventional fan rotor of similar dimensions the stagger angle of the mid height segments is reduced and the stagger of the tip segments increased. This feature produces a distinct mid-height bias to the airflow distribution across the span of a blade, with the result that airflow through the mid-height regions of the flow passage is increased and the airflow through the tip regions is reduced.

The distinctive airflow distribution produced by the invention is evident only close to the rotor in an axial direction, that is within approximately one chord length upstream of the leading edge and a similar distance downstream of the trailing edge. Thus the airflow in this region is deflected away from both the hub and the tip, and follows a curved trajectory towards the mid-height passage region.

Further to the features described above the stability of the swept blade is maintained by employing only modest amounts of sweep, when compared to previous designs, which tend to set the sweep angle to be greater than the complement of the mach cone angle at a given position on the aerofoil segment usually the leading edge although other additional positions, eg minimum suction surface static pressure point, have been stipulated.

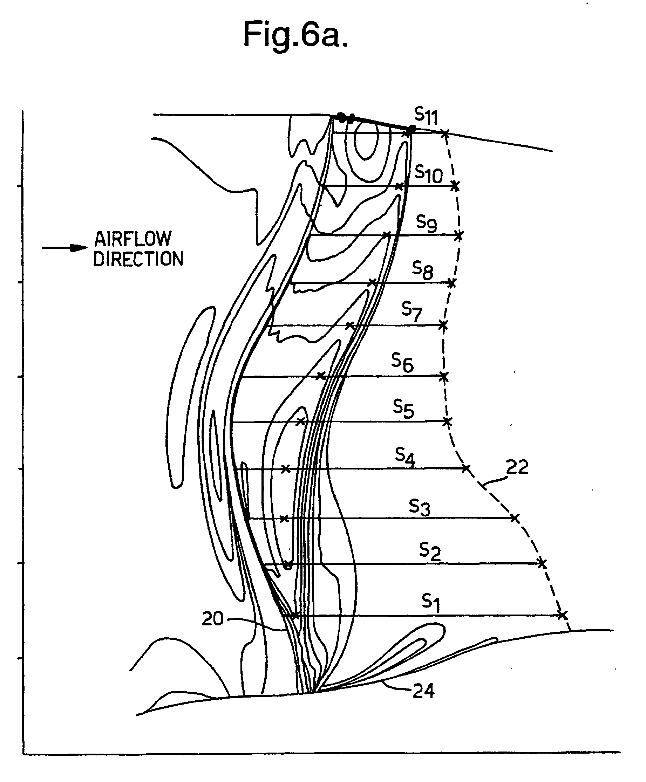

As mentioned above, in operation, each blade creates a shock wave front which at design speed is a predetermined distance behind the leading edge. Also on the suction surface of the blade the segment profiles combine to create a spanwise extending line of minimum static pressure points. Figure 6a shows a plot of static pressure contours on the suction surface of a fan blade according to the invention, and in the airflow regions immediately upstream of the leading edge 20 and downstream of the trailing edge 22. The eleven segment profiles of Figure 5 are indicated by horizontal lines S₁ - S₁₁, that is the lines so referenced which are parallel to the airflow direction indicated by an arrow. Apparent are pressure gradients in the axial or airflow direction which reveal the spanwise distribution of the line of minimum static pressure points, in front of the shock wave on the blade surface marking the abrupt .transition between subsonic and supersonic flow.

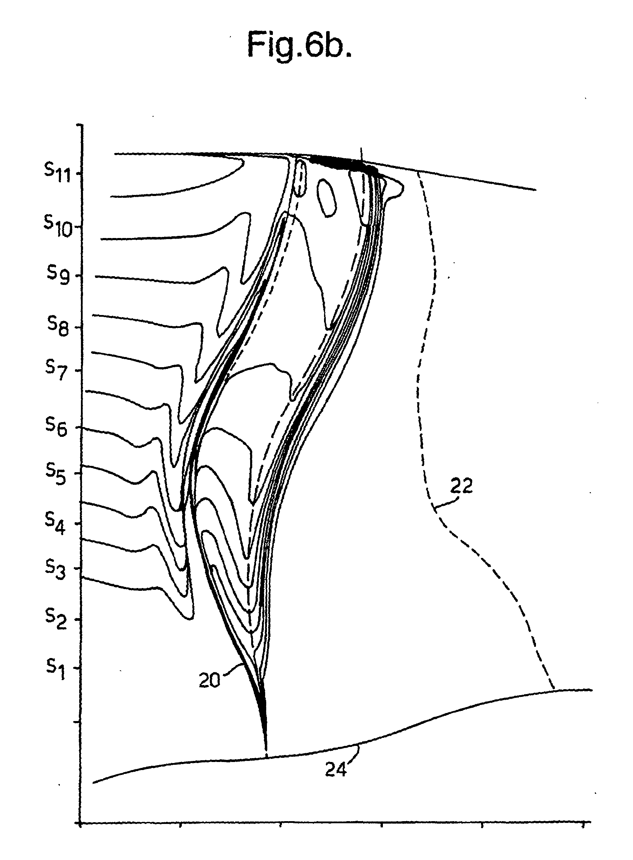

Figure 6b shows corresponding contours of relative Mach number for airflow over the blade suction surface. These clearly show the abrupt transitions at the blade leading edge and at the blade surface where the passage shock wave meets the surface. On the left hand, vertical axis the plane section numbers S₁ - S₁₁ are inscribed for cross-reference.

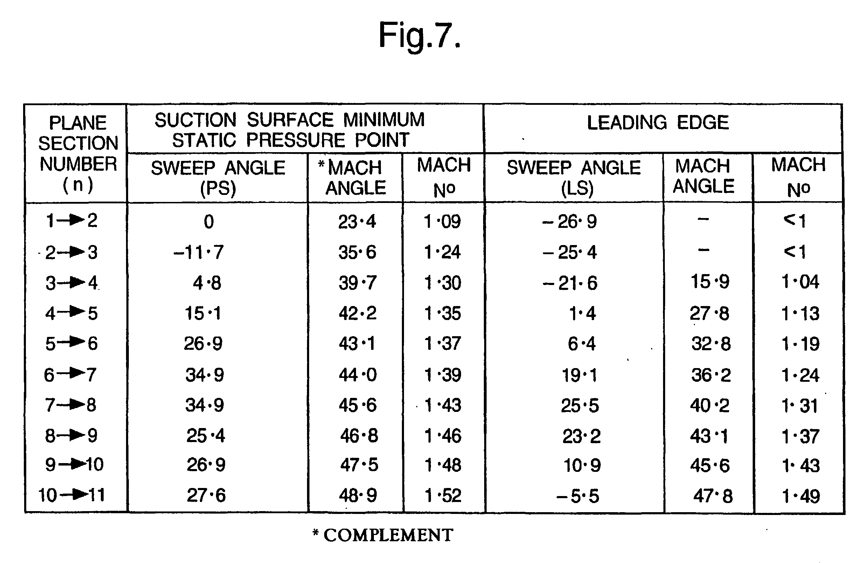

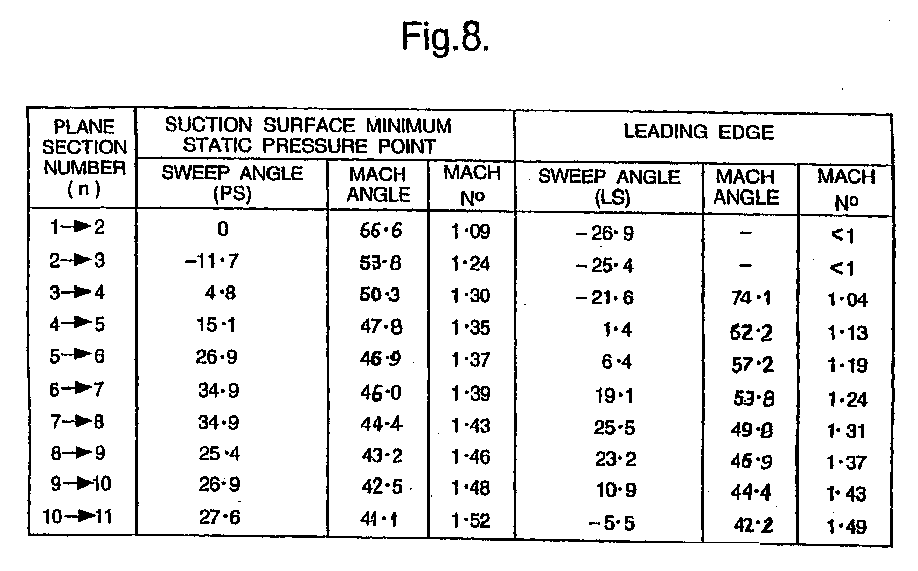

The swept blade design described above is presented as an exemplary embodiment of the invention. It will be appreciated that the described design is not the only swept blade design which may embody the invention defined in the following claims. Figure 7 contains a table showing sweep Angle, Mach angle, ie the angle of the Mach cone, and Mach No for both the line of minimum static pressure points and at the blade leading edge at mid-points of each of the blade section profile segment S₁ - S₁₁.

## Claims

1. A swept fan blade (2) for a ducted fan gas turbine engine comprising a root (4), a tip (14), a leading edge (10), a trailing edge (12), a pressure surface and a suction surface, the leading edge (10) is inclined with respect to an axial direction of airflow by a sweep angle which varies with span height, the leading edge (10) having a forward sweep angle between the root (4) and a first intermediate radius (S₅), the leading edge (10) having a rearward sweep angle between the first intermediate radius (S₅) and a second intermediate radius (S₁₀) **characterised in that** the leading edge (10) having a forward sweep angle between the second intermediate radius (S₁₀) and the tip (14).

2. A swept fan blade as claimed in claim 1 wherein the chord length of the tip (14) of the swept fan blade (2) is longer than the chord length at the second intermediate radius (S₁₀) of the swept fan blade (2).

3. A swept fan blade as claimed in claim 1 or claim 2 wherein the point half way between the leading edge (10) and the trailing edge (12) at the tip (14) of the swept fan blade (2) is axially upstream of the point half way between the leading edge (10) and the trailing edge (12) at the root (4) of the swept fan blade (2).

4. A swept fan blade as claimed in claim 1, claim 2 or claim 3 wherein the stagger angle of the swept fan blade (2) increases progressively from the root (4) to the tip (14).

5. A swept fan blade as claimed in any preceding claim wherein the shape of the pressure and suction surfaces creates, in use, a line of minimum pressure points on the suction surface of the swept fan blade (2) which is also inclined with respect to the axial direction by an angle which varies with span height of the swept fan blade (2) and also has a negative value in a region of subsonic flow over the leading edge (10).

6. A swept fan blade stage for a ducted fan gas turbine engine comprising a plurality of swept fan blades (2) as claimed in any preceding claim disposed around a hub (4) in a circumferential array.

7. A swept fan blade stage as claimed in claim 6 comprising a fan duct wall (16) encircling the swept fan blades (2), the fan duct wall (16) being convergent in a downstream direction in the region of the swept fan blades (2).

## Patentansprüche

1. Gepfeilte Gebläseschaufel (2) für ein Mantelgebläse-Gasturbinentriebwerk, mit einem Fuß (4), einer Spitze (14), einer Vorderkante (10), einer Hinterkante (12), einer Druckseite und einer Saugseite, wobei die Vorderkante (10) mit Bezug auf die Axialrichtung des Luftstroms um einen Pfeilungswinkel geneigt ist, der sich mit der Schaufelhöhe verändert, wobei weiter die Vorderkante (10) einen Vorwärtspfeilungswinkel zwischen dem Fuß (4) und einem ersten Zwischenradius (S5) aufweist, und die Vorderkante (10) einen Rückwärtspfeilungswinkel zwischen dem ersten Zwischenradius (S5) und einem zweiten Zwischenradius (S 10) aufweist, **dadurch gekennzeichnet, daß** die Vorderkante (10) einen Vorwärtspfeilungswinkel zwischen den zweiten Zwischenradius (S10) und der Spitze (14) hat.

2. Gepfeilte Gebläseschaufel nach Anspruch 1, wobei die Sehnenlänge der Spitze (14) der gepfeilten Gebläseschaufel (2) länger als die Sehnenlänge am zweiten Zwischenradius (S 10) der gepfeilten Gebläseschaufel (2) ist.

3. Gepfeilte Gebläseschaufel nach Anspruch 1 oder 2, wobei der mittige Punkt zwischen der Vorderkante (10) und der Hinterkante (12) an der Spitze (14) der gepfeilten Gebläseschaufel (2) axial stromauf des mittigen Punkts zwischen der Vorderkante (10) und der Hinterkante (12) am Fuß (4) der gepfeilten Gebläseschaufel (2) liegt.

4. Gepfeilte Gebläseschaufel nach Anspruch 1, 2 oder 3, wobei der Anstellwinkel der gepfeilten Gebläseschaufel (2) fortschreitend vom Fuß (4) zur Spitze) 14 zunimmt.

5. Gepfeilte Gebläseschaufel nach einem der vorhergehenden Ansprüche, wobei die vor der Druckseite und der Saugseite im Betrieb eine Linie minimaler Druckpunkte auf der Saugseite der gepfeilten Gebläseschaufel (2) erzeugt, die außerdem mit Bezug auf die Axialrichtung um einen Winkel geneigt ist, der sich mit der Schaufelhöhe der gepfeilten Gebläseschaufel (2) verändert und einen negativen Wert in einem Bereich subsonischer Strömung über die Vorderkante (10) hat.

6. Gebläsestufe mit gepfeilten Schaufeln für ein Mantelgebläse-Gasturbinentriebwerk, mit einer Vielzahl gepfeilter Gebläseschaufeln (2) nach einem der vorhergehenden Ansprüche, die um eine Nabe (4) in umfangsmäßiger Anordnung angeordnet sind.

7. Gebläsestufe mit gepfeilten Schaufeln nach Anspruch 6, mit einer Gebläsekanalwand (16), welche die gepfeilten Gebläseschaufeln (2) umschließt, wobei die Gebläsekanalwand (16) in stromabwärtiger Richtung im Bereich der gepfeilten Gebläseschaufeln (2) konvergent ist.

## Revendications

1. Aube de soufflante recourbée (2) pour un turbomoteur à gaz à soufflante canalisée comprenant une emplanture (4), une extrémité (14), un bord d'attaque (10), un bord de fuite (12), une surface de pression et une surface d'aspiration, le bord d'attaque (10) étant incliné par rapport à un sens axial d'écoulement de l'air d'un angle de courbure variant en fonction de l'envergure, le bord d'attaque (10) comportant un angle de courbure avant entre l'emplanture (4) et un premier rayon intermédiaire (S₅), le bord d'attaque (10) comportant un angle de courbure arrière entre le premier rayon intermédiaire (S₅) et un second rayon intermédiaire (S₁₀), **caractérisée en ce que** le bord d'attaque (10) comporte un angle de courbure avant entre le second rayon intermédiaire (S₁₀) et l'extrémité (14).

2. Aube de soufflante recourbée selon la revendication 1, dans laquelle la longueur de corde de l'extrémité (14) de l'aube de soufflante recourbée (2) est plus longue que la longueur de corde au niveau du second rayon intermédiaire (S₁₀) de l'aube de soufflante recourbée (2).

3. Aube de soufflante recourbée selon la revendication 1 ou 2, dans laquelle le point situé à mi-chemin entre le bord d'attaque (10) et le bord de fuite (12) à l'extrémité (14) de l'aube de soufflante recourbée (2) se situe axialement en amont du point situé à mi-chemin entre le bord d'attaque (10) et le bord de fuite (12) au niveau de l'emplanture (4) de l'aube de soufflante recourbée (2).

4. Aube de soufflante recourbée selon les revendications 1, 2 ou 3, dans laquelle l'angle de décalage de l'aube de soufflante recourbée (2) augmente progressivement, de l'emplanture (4) à l'extrémité (14).

5. Aube de soufflante recourbée selon l'une quelconque des revendications précédentes, dans laquelle la forme des surfaces de pression et d'aspiration crée, en service, une ligne de points de pression minimum sur la surface d'aspiration de l'aube de soufflante recourbée (2), qui est également inclinée par rapport au sens axial d'un angle variant en fonction de l'envergure de l'aube de soufflante recourbée (2) et présente également une valeur négative dans une zone d'écoulement subsonique située au-dessus du bord d'attaque (10).

6. Etage d'aubes de soufflante recourbées pour un turbomoteur à gaz à soufflante canalisée comprenant une pluralité d'aubes de soufflante recourbées (2) selon l'une quelconque des revendications précédentes disposées autour d'un moyeu (4) en formant une rangée circonférentielle.

7. Etage d'aubes de soufflante recourbées selon la revendication 6 comprenant une paroi (16) de canalisation de soufflante encerclant les aubes de soufflante recourbées (2), la paroi (16) de canalisation de soufflante étant convergente dans une direction en aval de la zone des aubes de soufflante recourbées (2).
